# EUROPÄISCHE PATENTSCHRIFT

(11) **EP 3 120 180 B1**
(45) Veröffentlichungstag und Bekanntmachung des Hinweises auf die Patenterteilung: **03.05.2023**
(21) Anmeldenummer: 15707143.2
(22) Anmeldetag: 02.03.2015
(51) Int. Cl.: G02B 27/00, G06V 20/59, G06V 40/19, G03B 15/05, G06F 3/01

(54) **DYNAMISCHE WELLENLÄNGENANPASSUNG VON EYE-TRACKING BELEUCHTUNGEN**
DYNAMIC WAVELENGTH ADJUSTMENT OF EYE-TRACKING LIGHTS
SYSTÈME ADAPTATEUR DYNAMIQUE DE LONGUEURS D'ONDE DE SYSTÈMES D'ÉCLAIRAGE À OCULOMÉTRIE

(30) Priorität: 17.03.2014 DE 102014204845
(43) Veröffentlichungstag der Anmeldung: 25.01.2017
(73) Patentinhaber: Bayerische Motoren Werke Aktiengesellschaft, 80809 München (DE)
(72) Erfinder: KAUFMANN, Matthias Roland, 85716 Unterschleissheim (DE); RASSHOFER, Ralph Helmar, 86551 Aichach (DE); SCHWARZ, Felix, 80333 München (DE)
(86) Internationale Anmeldenummer: PCT/EP2015/054263
(87) Internationale Veröffentlichungsnummer: WO 2015/139939

(56) Entgegenhaltungen:
- WO-A1-01/33282
- DE-A1-102008 055 186
- US-A1- 2008 199 165

## Beschreibung

Die Erfindung betrifft ein Augenerfassungssystem zur Bestimmung der Blickrichtung eines Benutzers sowie ein Verfahren zu demselben Zweck.

Heutzutage sind Eye-Tracking-Systeme (auch Augenerfassungssysteme genannt) bekannt, die die Blickrichtung und die häufig auch die Blickbewegung der Augen bestimmen. Es wurde vorgeschlagen diese Systeme in Fahrzeugen, insbesondere PKW, einzusetzen.

Generell kann zwischen kopfgestützten Systemen, den sogenannten "Headmounted Eye Tracker" und mobilen, berührungslosen Systemen, die sogenannten "Remote Eye Tracker" unterschieden werden, die beide hierin als Eye-Tracking System verstanden werden. Beide Systeme enthalten im Allgemeinen zwei Komponenten: eine Augenkamera, die das Auge aufnimmt und erkennt und häufig auch verfolgt, und eine Lichtquelle (meist im Infrarotspektrum).

Während die Lichtquelle Licht zum Auge hin emittiert, verfolgt die Kamera die Reflexion des Lichts vom Auge. Die Daten werden verwendet um die Ausrichtung der Augen, die Bewegung der Augen und letztlich die Blickrichtung zu bestimmen.

Elektromagnetische Strahlung (also Licht) kann für die Augen und die Haut bei zu großen Intensitätswerten, also zu großer Leistung, gefährlich sein. Aus diesem Grund sind bei der Verwendung von künstlicher Strahlung Grenzwerte einzuhalten. In der EU werden Grenzwerte hierfür beispielsweise durch die Richtlinie 2006/25/EG "Richtlinien über Mindestvorschriften zum Schutz von Sicherheit und Gesundheit der Arbeitnehmer vor der Gefährdung durch physikalische Einwirkungen (künstliche optische Strahlung)" festgelegt.

Die gesundheitlichen Auswirkungen von künstlicher optischer Strahlung auf biologisches Gewebe ist abhängig von Wellenlänge, Intensität und Bestrahlungsdauer und von den Eigenschaften des Gewebes, die eine unterschiedliche Reflexion, Streuung und Absorption der Strahlung zur Folge haben.

In den Systemen des Standes der Technik ist die Infrarotbeleuchtung, die für die Blicksteuerungssysteme nötig ist, in ihrer Wellenlänge meist statisch. Der Wellenlängenbereich aktueller Eye-Tracking Beleuchtungssysteme erstreckt sich normalerweise von 800 nm bis 900nm. In diesem Bereich ist die maximal emittierbare Leistung aufgrund von Augensicherheitsbestimmungen und den oben genannten Richtlinien stark beschränkt. So kommt es in Situationen mit hellem Umgebungslicht (z.B. Sonnenlicht) zu einem schlechteren Signal zu Rausch Verhältnis (SNR) und somit zu einem schlechteren Eye-Tracking- Ergebnis. Es kann in diesen Situationen auch vorkommen, dass das Eye-Tracking gänzlich misslingt. Andererseits kann in dunkleren Situationen, in denen also wenig Umgebungslicht vorhanden ist, eine vorgegebene statische Intensität der Infrarotbeleuchtung unnötig hoch sein und somit auch hinsichtlich der Augensicherheit bedenklich sein.

In der Druckschrift WO 99/67757 wird ein System zur Kommunikation mithilfe der Bewegung eines Auges des Benutzers beschrieben. Das System umfasst eine Lichtquelle und einen Sensor. In der WO 99/67757 wird allgemein beschrieben, dass die Intensität und/oder Frequenz der Lichtquelle angepasst werden kann. In der Druckschrift WO 01/33282 wird ein persönliches Anzeigensystem mit fortlaufender Erkennung der Blickrichtung des Benutzers offenbart. In der Druckschrift US 2008/199165 wird ein weiteres Blickrichtungserkennungssystem mit Verwendung zweier Infrarot-Lichtquellen beschrieben.

Die Aufgabe, die der Erfindung zugrundeliegt, ist es, eine Beleuchtung für ein Eye-Tracking System bereitzustellen, die auch bei unterschiedlich intensivem Umgebungslicht eine Blickrichtungsbestimmung ermöglicht und dabei das Auge möglichst wenig mit Strahlung belastet.

Die Aufgabe wird durch die Gegenstände der unabhängigen Patentansprüche gelöst. Vorteilhafte Weiterbildungen sind in den abhängigen Ansprüchen definiert.

In einem ersten Aspekt umfasst ein Augenerfassungssystem zur Bestimmung der Blickrichtung eines Benutzers: Eine Kamera zur Aufnahme der Augen des Benutzers; Eine Lichtquelle zur Beleuchtung zumindest der Augen des Benutzers, die dazu eingerichtet ist, Licht einer ersten Wellenlänge mit einer ersten Leistung abzugeben und Licht einer zweiten Wellenlänge mit einer zweiten Leistung abzugeben; wobei die erste Leistung geringer als die zweite Leistung ist; wobei die erste Wellenlänge im Bereich von 800 nm bis 900 nm ist; und wobei die zweite Wellenlänge größer als 1,2 µm ist; wobei die zweite Wellenlänge insbesondere 1,5 µm ist; Elektronische Rechenmittel; wobei das Augenerfassungssystem zu Folgendem eingerichtet ist: Erkennen, dass die Beleuchtung des Benutzers mit Licht der ersten Wellenlänge mit der ersten Leistung nicht ausreichend ist für eine vorgegebene Güte der Bestimmung der Blickrichtung; In Antwort auf das Erkennen: Beleuchten des Benutzers mit Licht der zweiten Wellenlänge mit der zweiten Leistung mithilfe der Lichtquelle; Bestimmen der Blickrichtung des Benutzers. Die Emission von Licht einer Wellenlänge schließt nicht aus, dass um diese Wellenlänge herum ebenfalls Licht abgegeben wird. Die Wellenlänge wird hierin bei einer Emission in einem Wellenlängenbereiches als die Mitte des Bereiches oder die Wellenlänge mit der höchsten Intensität, also Leistung, verstanden. Bei der Lichtquelle kann es sich auch um einen Laser handeln. Die elektronischen Rechenmittel können ein Mikrocontroller, eine CPU oder sonstige elektronische Schaltkreise zum Rechnen und Speichern umfassen.

Hierin wird also vorgeschlagen, die Intensität der Beleuchtung zu ändern, je nachdem, ob die Beleuchtung für die Blickerkennung ausreichend ist, oder nicht. Für die intensivere Beleuchtung wird eine niedrigere Frequenz gewählt. Die Wahl der Frequenzen und Intensitäten orientiert sich an den rechtlichen Vorgaben. Wenn beispielsweise die erste Wellenlänge zwischen 800 nm und 900 nm liegt, dann kann für die zweite Wellenlänge 1,5 µm gewählt werden und dabei die 10-fache Leistung abgegeben werden.

Parallel zur Änderung der Beleuchtungsfrequenz kann auch ein Filter geändert werden, das Licht für die Kameraaufnahmen filtert. Das Filter wird vorteilhafterweise auf die jeweils abgegebene Lichtfrequenz eingestellt.

Die Wellenlänge der Infrarotbeleuchtung für Blickerkennungssysteme wird somit durch eine Steuerung an die aktuelle Situation (helles/ dunkles Umgebungslicht) angepasst. Dadurch kann die emittierte Leistung erhöht bzw. erniedrigt werden und somit ein jederzeit optimales Ergebnis erzielt werden, während gleichzeitig die Belastung des Auges und der Energieverbrauch minimiert werden.

Je nach Implementierung kann Situations- und Helligkeitsabhängig zwischen verschiedenen Wellenlängen dynamisch umgeschaltet werden. Somit können die Vorteile der verschiedenen Wellenlängen abgedeckt werden. So kann man z.B. in hellen Situationen mit einer längeren Wellenlänge (z.B. 1.5 µm) ein besseres Eye- Tracking Ergebnis erzielen, da die zu emittierende Leistung höher geschalten werden kann, während es in dunklen Situationen (Tunnel, Nacht) ausreicht in einem alternativen Wellenlängenbereich niedrigere Leistung zu emittieren.

Es können vor allem bei hellem Umgebungslicht bessere Eye-Tracking-Ergebnisse erzielt werden. In manchen Fällen wird durch die dynamische Wellenlängenanpassung der Eye-Tracking- Beleuchtung bei hellen Lichtverhältnissen überhaupt erst das Eye-Tracking ermöglicht. Außerdem werden die Augen durch das dynamische Umschalten geschont. So kann z.B. die emittierte Leistung in dunklen Situationen zurückgenommen werden. Darüber hinaus wird die Intensität der Beleuchtung auf das tatsächlich benötigte Minimum reduziert und wirkt sich somit positiv auf den Energieverbrauch eines Fahrzeugs mit dem Eye-Tracking System aus, was insbesondere für elektrisch betriebene Fahrzeuge vorteilhaft ist.

In einer Weiterbildung ist das Erkennen, dass die Beleuchtung des Benutzers mit Licht der ersten Wellenlänge mit der ersten Leistung nicht ausreichend ist, abhängig von einem oder mehreren der folgenden Kriterien: Dem es Signal-zu-Rausch Verhältnisses der Abbildung der Augen in den Aufnahmen der Kamera; Der Helligkeit, insbesondere im Bereich der ersten Wellenlänge, des vorhandenen Umgebungslichts; Der Tageszeit; oder dem Ort, an dem sich das System befindet, insbesondere, ob es in einem Tunnel ist.

In einer bevorzugten Implementierung ist die zweite Leistung das 10-fache, 5-fache oder doppelte der ersten Leistung ist; und/oder die erste Wellenlänge ist im Bereich von 800 nm bis 900 nm; und/oder die zweite Wellenlänge ist größer als 1,2 µm und insbesondere 1,5 µm.

Es kann vorgesehen sein, dass das Augenerfassungssystem nach dem Umschalten auf eine hohe Beleuchtungsintensität wieder auf die niedrigere Intensitätsstufe zurückschaltet. Dazu ist das System ferner eingerichtet zum: Erkennen, dass die Beleuchtung des Benutzers mit Licht der ersten Wellenlänge mit der ersten Leistung ausreichend ist für eine vorgegebene Güte der Bestimmung der Blickrichtung; In Antwort auf das Erkennen: Beleuchten des Benutzers mit Licht der ersten Wellenlänge mit der ersten Leistung mithilfe der Lichtquelle. Es wird also beispielsweise das Signal-zu-Rausch Verhältnis bestimmt und sobald dieses einen Schwellwert überschreitet, wieder auf die erste Wellenlänge und die erste Leistung umgeschaltet.

In einer Weiterbildung umfasst die Lichtquelle mehrere einzelne Leuchtelemente, insbesondere Halbleiter wie LEDs, die dazu eingerichtet sind, je nach Ansteuerung, Licht der ersten Wellenlänge mit der ersten Leistung oder Licht der zweiten Wellenlänge mit der zweiten Leistung abzugeben. Die einzelnen Leuchtelemente können in einem Fahrzeug an verschiedenen Stellen des Innenraums angeordnet sein. Vorteilhafterweise sind sie so angeordnet, dass sie den Benutzer, beispielsweise den Fahrer derart beleuchten, dass seine Augen in jeder Position des Kopfes des Benutzers ausreichend beleuchtet sind.

Das Augenerfassungssystem ist vorteilhafterweise in einem Fahrzeug umfasst.

In einem anderen Aspekt umfasst ein Verfahren zum Bestimmen der Blickrichtung eines Benutzers mithilfe eines Augenerfassungssystems, wobei das Augenerfassungssystem: Eine Kamera zur Aufnahme der Augen des Benutzers; Eine Lichtquelle zur Beleuchtung zumindest der Augen des Benutzers, die dazu eingerichtet ist, Licht einer ersten Wellenlänge mit einer ersten Leistung abzugeben und Licht einer zweiten Wellenlänge mit einer zweiten Leistung abzugeben; wobei die erste Leistung geringer als die zweite Leistung ist; wobei die erste Wellenlänge im Bereich von 800 nm bis 900 nm ist; und wobei die zweite Wellenlänge größer als 1,2 µm ist; wobei die zweite Wellenlänge insbesondere 1,5 µm ist; Elektronische Rechenmittel; wobei das Verfahren die folgenden Schritte umfasst: Erkennen, dass die Beleuchtung des Benutzers mit Licht der ersten Wellenlänge mit der ersten Leistung nicht ausreichend ist für eine vorgegebene Güte der Bestimmung der Blickrichtung; In Antwort auf das Erkennen: Beleuchten des Benutzers mit Licht der zweiten Wellenlänge mit der zweiten Leistung mithilfe der Lichtquelle; Bestimmen der Blickrichtung des Benutzers. Das Verfahren kann wie die oben beschriebene Augenerfassungsvorrichtung fortgebildet werden.

### KURZE BESCHREIBUNG DER ZEICHNUNG

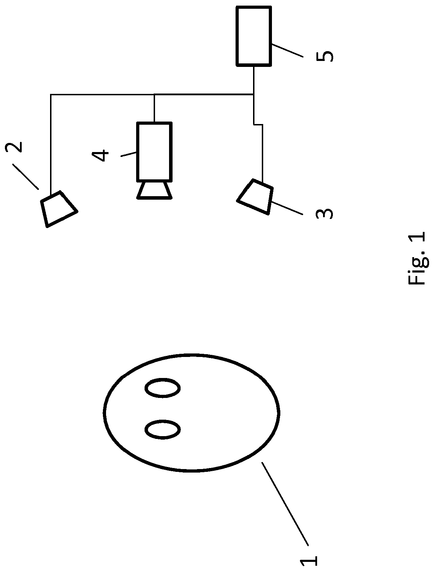

Fig. 1 zeigt schematisch ein Augenerfassungssystem gemäß einem Ausführungsbeispiel.

### DETAILLIERTE BESCHREIBUNG DES AUSFÜHRUNGSBEISPIELS

Fig. 1 zeigt schematisch ein Augenerfassungssystem gemäß einem Ausführungsbeispiel. Das Augenerfassungssystem ist in einem Fahrzeug umfasst (nicht dargestell) und umfasst eine Lichtquelle, die die zwei Leuchtelemente 2 und 3 umfasst. Jedes Leuchtelement umfasst eine LED, die Licht mit einer Frequenz, die einer Wellenlänge von 850 nm entspricht, mit einer ersten Leistung emittieren kann. Neben der Emission von Licht einer einzigen Frequenz kann auch in einem Frequenzbereich um diese Frequenz herum Licht emittiert werden. Darüber hinaus kann jede LED derart angesteuert werden, dass sie mit einer größeren Leistung auf einer zweiten, tieferen Frequenz Licht emittiert, die einer Wellenlänge von 1,5 µm entspricht. Die Ansteuerung der LEDs 2 und 3 geschieht über die elektronische Steuereinheit 5. Die Steuereinheit 5 ist ebenfalls mit der Kamera 4 verbunden. Die Kamera 4 verfügt über einen veränderlichen Filter, der je nach Ansteuerung im Wesentlichen Licht der ersten Frequenz oder zweiten Frequenz passieren lässt. Die Steuereinheit 5 empfängt die Aufnahmen der Kamera 4 und erkennt in diesen die Augen des Benutzers 1 und deren Ausrichtung. Die Steuereinheit 5 verarbeitet diese Daten und errechnet daraus die Blickrichtung.

In den empfangenen Aufnahmen extrahiert die Steuereinheit 5 das Signal-zu-Rausch Verhältnis (SNR) der für die Erkennung der Augen und die Bestimmung deren Ausrichtung relevanten Merkmale der Aufnahmen. Liegt dieses SNR unter einem vorbestimmten Schwellwert veranlasst die Steuereinheit 5 das Umschalten von der ersten Frequenz auf die zweite Frequenz der Beleuchtung und dementsprechend auch ein Umschalten der Beleuchtungsintensität, also der Beleuchtungsleistung.

Die Steuereinheit 5 kann in der Entscheidung, ob die Beleuchtung umzuschalten ist ebenfalls berücksichtigen, ob anhand der Tageszeit mit einer hellen Umgebung zu rechnen ist, oder nicht. Dabei wird insbesondere dann die Beleuchtung umgeschaltet, wenn es Tag ist (und nicht Nacht).

Die Steuereinheit 5 kontrolliert in regelmäßigen Abständen das SNR der relevanten Merkmale in den Aufnahmen und veranlasst ein Umschalten auf die höhere Frequenz der Beleuchtung, wenn das SNR über einem Schwellwert liegt.

## Patentansprüche

1. Augenerfassungssystem zur Bestimmung der Blickrichtung eines Benutzers; umfassend:
Eine Kamera (4) zur Aufnahme der Augen des Benutzers;
Eine Lichtquelle (2, 3) zur Beleuchtung zumindest der Augen des Benutzers, die dazu eingerichtet ist, Licht einer ersten Wellenlänge mit einer ersten Leistung abzugeben und Licht einer zweiten Wellenlänge mit einer zweiten Leistung abzugeben; wobei die erste Leistung geringer als die zweite Leistung ist; wobei die erste Wellenlänge im Bereich von 800 nm bis 900 nm ist; und wobei die zweite Wellenlänge größer als 1,2 µm ist;
Elektronische Rechenmittel (5); wobei das Augenerfassungssystem zu Folgendem eingerichtet ist:
Erkennen, dass die Beleuchtung des Benutzers mit Licht der ersten Wellenlänge mit der ersten Leistung nicht ausreichend ist für eine vorgegebene Güte der Bestimmung der Blickrichtung;
In Antwort auf das Erkennen: Beleuchten des Benutzers mit Licht der zweiten Wellenlänge mit der zweiten Leistung mithilfe der Lichtquelle;
Bestimmen der Blickrichtung des Benutzers.

2. Augenerfassungssystem nach Anspruch 1, wobei das Erkennen, dass die Beleuchtung des Benutzers mit Licht der ersten Wellenlänge mit der ersten Leistung nicht ausreichend ist, abhängig ist einem oder mehreren der folgenden Kriterien:
Dem Signal-zu-Rausch Verhältnis der Abbildung der Augen in den Aufnahmen der Kamera;
Der Helligkeit, insbesondere im Bereich der ersten Wellenlänge, des vorhandenen Umgebungslichts;
Der Tageszeit;
dem Ort, an dem sich das System befindet.

3. Augenerfassungssystem nach einem der vorhergehenden Ansprüche,
wobei die zweite Leistung das 10-fache, 5-fache oder doppelte der ersten Leistung ist.

4. Augenerfassungssystem nach einem der vorhergehenden Ansprüche, wobei das Augenerfassungssystem ferner eingerichtet ist zum:
Erkennen, dass die Beleuchtung des Benutzers mit Licht der ersten Wellenlänge mit der ersten Leistung ausreichend ist für eine vorgegebene Güte der Bestimmung der Blickrichtung;
In Antwort auf das Erkennen: Beleuchten des Benutzers mit Licht der ersten Wellenlänge mit der ersten Leistung mithilfe der Lichtquelle.

5. Augenerfassungssystem nach einem der vorhergehenden Ansprüche, wobei die Lichtquelle (2, 3) mehrere einzelne Leuchtelemente umfasst, insbesondere Halbleiter wie LEDs, die dazu eingerichtet sind, je nach Ansteuerung, Licht der ersten Wellenlänge mit der ersten Leistung oder Licht der zweiten Wellenlänge mit der zweiten Leistung abzugeben.

6. Fahrzeug, umfassend ein Augenerfassungssystem nach einem der vorhergehenden Ansprüche.

7. Verfahren zum Bestimmen der Blickrichtung eines Benutzers mithilfe eines Augenerfassungssystems, wobei das Augenerfassungssystem umfasst: Eine Kamera (4) zur Aufnahme der Augen des Benutzers; Eine Lichtquelle (2,3) zur Beleuchtung zumindest der Augen des Benutzers, die dazu eingerichtet ist, Licht einer ersten Wellenlänge mit einer ersten Leistung abzugeben und Licht einer zweiten Wellenlänge mit einer zweiten Leistung abzugeben; wobei die erste Leistung geringer als die zweite Leistung ist; und wobei die erste Wellenlänge im Bereich von 800 nm bis 900 nm ist; und wobei die zweite Wellenlänge größer als 1,2 µm ist; Elektronische Rechenmittel (5);
wobei das Verfahren die folgenden Schritte umfasst:
Erkennen, dass die Beleuchtung des Benutzers mit Licht der ersten Wellenlänge mit der ersten Leistung nicht ausreichend ist für eine vorgegebene Güte der Bestimmung der Blickrichtung;
In Antwort auf das Erkennen: Beleuchten des Benutzers mit Licht der zweiten Wellenlänge mit der zweiten Leistung mithilfe der Lichtquelle;
Bestimmen der Blickrichtung des Benutzers.

## Claims

1. Eye tracking system for determining the gaze direction of a user; comprising:
a camera (4) for recording the eyes of the user;
a light source (2, 3) for illuminating at least the eyes of the user, which is configured to emit light of a first wavelength having a first power and to emit light of a second wavelength having a second power; wherein the first power is less than the second power; wherein the first wavelength is in the range of 800 nm to 900 nm; and wherein the second wavelength is greater than 1.2 µm;
electronic computing means (5); wherein the eye tracking system is configured for the following:
recognizing that the illumination of the user with light of the first wavelength having the first power is insufficient for a predefined quality of the determination of the gaze direction;
in response to the recognizing: illuminating the user with light of the second wavelength having the second power with the aid of the light source;
determining the gaze direction of the user.

2. Eye tracking system according to Claim 1, wherein recognizing that the illumination of the user with light of the first wavelength having the first power is insufficient is dependent on one or more of the following criteria:
the signal-to-noise ratio of the imaging of the eyes in the recordings of the camera;
the brightness, in particular in the range of the first wavelength, of the ambient light present;
the time of day;
the location at which the system is situated.

3. Eye tracking system according to either of the preceding claims,
wherein the second power is 10 times, 5 times or double the first power.

4. Eye tracking system according to any of the preceding claims, wherein the eye tracking system is furthermore configured for:
recognizing that the illumination of the user with light of the first wavelength having the first power is sufficient for a predefined quality of the determination of the gaze direction;
in response to the recognizing: illuminating the user with light of the first wavelength having the first power with the aid of the light source.

5. Eye tracking system according to any of the preceding claims, wherein the light source (2, 3) comprises a plurality of individual luminous elements, in particular semiconductors such as LEDs, which are configured, depending on driving, to emit light of the first wavelength having the first power or light of the second wavelength having the second power.

6. Vehicle, comprising an eye tracking system according to any of the preceding claims.

7. Method for determining the gaze direction of a user with the aid of an eye tracking system, wherein the eye tracking system comprises: a camera (4) for recording the eyes of the user; a light source (2, 3) for illuminating at least the eyes of the user, which is configured to emit light of a first wavelength having a first power and to emit light of a second wavelength having a second power; wherein the first power is less than the second power; and wherein the first wavelength is in the range of 800 nm to 900 nm; and wherein the second wavelength is greater than 1.2 µm; electronic computing means (5);
wherein the method comprises the following steps:
recognizing that the illumination of the user with light of the first wavelength having the first power is insufficient for a predefined quality of the determination of the gaze direction;
in response to the recognizing: illuminating the user with light of the second wavelength having the second power with the aid of the light source;
determining the gaze direction of the user.

## Revendications

1. Système de détection oculaire destiné à déterminer la direction d'observation d'un utilisateur ; ledit système comprenant :
une caméra (4) destinée à capturer les yeux de l'utilisateur ;
une source de lumière (2, 3) destinée à éclairer au moins les yeux de l'utilisateur et conçue pour émettre une lumière d'une première longueur d'onde à une première puissance et émettre une lumière d'une deuxième longueur d'onde à une deuxième puissance ; la première puissance étant inférieure à la deuxième puissance ; la première longueur d'onde étant dans la gamme allant de 800 nm à 900 nm ; et la deuxième longueur d'onde étant supérieure à 1,2 µm ;
des moyens de calcul électronique (5) ; le système de détection oculaire étant conçu pour :
détecter que l'éclairement de l'utilisateur avec une lumière de la première longueur d'onde à la première puissance n'est pas suffisant pour une qualité spécifiée de la détermination de la direction d'observation ;
en réponse à la détection : éclairer l'utilisateur avec une lumière de la deuxième longueur d'onde à la deuxième puissance à l'aide de la source de lumière ;
déterminer la direction d'observation de l'utilisateur.

2. Système de détection oculaire selon la revendication 1, la détection que l'utilisateur n'est pas suffisamment éclairé par la lumière de la première longueur d'onde à la première puissance dépendant d'un ou plusieurs des critères suivants :
le rapport signal sur bruit de la reproduction des yeux dans les captures de la caméra ;
la luminosité de la lumière ambiante présente, notamment dans la gamme de la première longueur d'onde ;
le moment de la journée ;
l'endroit où se trouve le système.

3. Système de détection oculaire selon l'une des revendications précédentes,
la deuxième puissance étant 10 fois, 5 fois ou deux fois la première puissance.

4. Système de détection oculaire selon l'une des revendications précédentes, le système de détection oculaire étant en outre conçu pour :
détecter que l'éclairement de l'utilisateur avec une lumière de la première longueur d'onde à la première puissance est suffisant pour une qualité spécifiée de la détermination de la direction d'observation ;
en réponse à la détection : éclairer l'utilisateur avec une lumière de la première longueur d'onde à la première puissance à l'aide de la source de lumière.

5. Système de détection oculaire selon l'une des revendications précédentes, la source de lumière (2, 3) comprenant une pluralité d'éléments électroluminescents individuels, notamment des semi-conducteurs tels que des LED, qui sont conçus pour émettre, selon l'activation, de la lumière de la première longueur d'onde à la première puissance ou de la lumière de la deuxième longueur d'onde à la deuxième puissance.

6. Véhicule comprenant un système de détection oculaire selon l'une des revendications précédentes.

7. Procédé de détermination de la direction d'observation d'un utilisateur à l'aide d'un système de détection oculaire, le système de détection oculaire comprenant : une caméra (4) destinée à capturer les yeux de l'utilisateur ; une source de lumière (2, 3) destinée à éclairer au moins les yeux de l'utilisateur et conçue pour émettre une lumière d'une première longueur d'onde à une première puissance et une lumière d'une deuxième longueur d'onde à une deuxième puissance ; la première puissance étant inférieure à la deuxième puissance ; et la première longueur d'onde étant dans la gamme de 800 nm à 900 nm ; et la deuxième longueur d'onde étant supérieure à 1,2 µm ; des moyens de calcul électroniques (5) ;
le procédé comprenant les étapes suivantes :
détecter que l'éclairement de l'utilisateur avec une lumière de la première longueur d'onde à la première puissance n'est pas suffisant pour une qualité spécifiée de la détermination de la direction d'observation ;
en réponse à la détection : éclairer l'utilisateur avec une lumière de la deuxième longueur d'onde à la deuxième puissance à l'aide de la source de lumière ;
déterminer la direction d'observation de l'utilisateur.
